(19) Europäisches Patentamt
European Patent Office
Office européen des brevets

(11) EP 2 655 453 B1

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(21) Anmeldenummer: **11794805.9**

(22) Anmeldetag: **16.12.2011**

(51) Int Cl.:
***C08F 265/06*** (2006.01) ***C09D 151/00*** (2006.01)
***C04B 41/71*** (2006.01) ***C08F 2/24*** (2006.01)
***C04B 24/16*** (2006.01) ***C04B 41/00*** (2006.01)
***C04B 41/48*** (2006.01) ***C04B 41/63*** (2006.01)
***C09D 133/14*** (2006.01) *C08F 220/18* (2006.01)

(86) Internationale Anmeldenummer:
**PCT/EP2011/073122**

(87) Internationale Veröffentlichungsnummer:
**WO 2012/084737 (28.06.2012 Gazette 2012/26)**

(54) **MEHRSTUFIGE POLYMERISATDISPERSIONEN, VERFAHREN ZU DEREN HERSTELLUNG UND DEREN VERWENDUNG**

MULTISTAGE POLYMER DISPERSIONS, METHOD FOR PRODUCING SAME, AND USE THEREOF

DISPERSIONS POLYMÈRES MULTIÉTAPES, LEUR PROCÉDÉ DE PRODUCTION ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2010 EP 10196219**

(43) Veröffentlichungstag der Anmeldung:
**30.10.2013 Patentblatt 2013/44**

(73) Patentinhaber: **BASF SE**
**67056 Ludwigshafen am Rhein (DE)**

(72) Erfinder:
- **ROLLER, Sebastian**
  **68167 Mannheim (DE)**
- **JAHNS, Ekkehard**
  **69469 Weinheim (DE)**
- **DENU, Hans-Jürgen**
  **67159 Friedelsheim (DE)**

(74) Vertreter: **BASF IP Association**
**BASF SE**
**G-FLP-C006**
**67056 Ludwigshafen (DE)**

(56) Entgegenhaltungen:
**EP-A1- 2 017 313**
**EP-A2- 1 518 846**
**WO-A1-2009/080614**
**DE-A1-102005 032 194**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 655 453 B1

## Beschreibung

Die vorliegende Erfindung betrifft wässrige mehrstufige Polymerisatdispersionen, erhältlich durch radikalisch initiierte wässrige Emulsionspolymerisation, mit einer Weich- und einer Hartphase und einem Stufenverhältnis von hart zu weich von 25 bis 95 Gew.-% zu 75 bis 5 Gew.-%, wobei die Glasübergangstemperatur (Tg) der Weichphase als erster Stufe -30 bis 0 °C und die der Hartphase als zweiter Stufe 20 bis 60 °C beträgt, enthaltend wenigstens ein Monomeres der allgemeinen Formel I

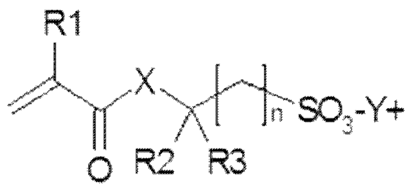

(I)

in der die Variablen folgende Bedeutung haben:

n = 0 bis 2,
R1, R2, R3 = unabhängig voneinander Wasserstoff oder Methylgruppe,
X = O oder NH,
Y = H, Alkalimetall, $NH_4$, dadurch gekennzeichnet, dass es sich bei dem Polymerisat der ersten Stufe um ein Copolymer handelt, welches

(i) in einer Menge von 5 bis 50 Gew.%, bezogen auf 100 Gew.-Teile der insgesamt in der ersten und zweiten Stufe zu polymerisierenden Monomeren, eingesetzt wird, und welches

(ii) zu mindestens 80 Gew.-% und bis zu 99 Gew-% aus Hauptmonomeren aufgebaut ist, welche ausgewählt sind aus der Gruppe bestehend aus C1- bis C10-Alkyl(meth)acrylaten, Amiden und Hydroxyalkylestern der $\alpha,\beta$-ungesättigten $C_3$-$C_6$-Carbonsäuren, besonders bevorzugt Acrylamid, Methacrylamid, 2-Hydroxyethyl-acrylat, 2-Hydroxyethylmethacrylat, 2-Hydroxypropyl(meth)acrylat oder 1,4-Butan-diolmonoacrylat und Mischungen dieser Monomeren, insbesondere n-Butylacrylat, Methylmethacrylat und Acrylamid, und

(iii) zu mindestens 0,1 Gew.% und bis zu 5 Gew-% Monomere I, welche vorzugsweise ausgewählt sind aus der Gruppe, -2-Acrylamido-2-methyl-propansulfonsäure (AMPS), Methacrylsäure-(3'-sulfopropyl)-ester, Acrylsäure-(3'-sulfopropyl)-ester, Methacrylsäure-(2'-sulfoethyl)-ester, enthält.

Weiterhin betrifft die vorliegende Erfindung Verfahren zur Herstellung dieser wässrigen Polymerisatdispersionen sowie deren Verwendung als Bindemittel in Beschichtungen, sowie Beschichtungen enthaltend die erfindungsgemäße Polymerisatdispersion.

Wäßrige Polymerisatdispersionen des Standes der Technik werden als Bindemittel in Beschichtungsmitteln, insbesondere zur Beschichtung von mineralischen Oberflächen und mineralischen Formkörpern, wie zum Beispiel Faserzementplatten und "Siding Boards" zur Wandverkleidung verwendet. Faserzementplatten und "Siding Boards" sind hochwertige Baumaterialien, die viele Vorteile gegenüber anderen Baumaterialien wie z.B. Holzverkleidungen, Polyvinylchloridplatten oder Metallbeplankungen, z.B. aus Aluminium oder Stahlblech, besitzen. Ein Hauptvorteil ist die Dauerhaftigkeit von Faserzementplatten gegenüber Witterungseinflüssen und auch die mechanische Stabilität ist häufig besser als bei anderen Baumaterialien. Faserzementplatten werden aus Zement, Wasser, ggf. Füllstoffen wie Sand oder Silica und einem Faseranteil aus natürlichen Fasern, z.B. Holz- oder Cellulosefasern, und auch synthetischen Fasern hergestellt. Die Mischung wird auf eine Form gegeben, ggf. auf einem Sieb entwässert und dann gehärtet. Die Rohmasse kann so wie sie ist gehärtet werden oder durch pressen verdichtet werden, um eine größere Endfestigkeit nach der Härtung zu erreichen. Die Faserzementplatten können flach hergestellt werden oder auch gewellt als sogenannte Wellplatten. Die Faserzementplatten oder Siding Boards können durch Prägen mit einer Oberflächenstruktur versehen werden, die dem Aussehen nach z.B. einer Holzoberfläche ähnelt. Die Platten können in verschiedenartige Formen und Größen geschnitten werden: große Tafeln, kleinteilige Quadrate, Rechtecke, Rhomben oder auch als Schieferreplikas oder Replikas von anderen Baustoffen dargestellt werden. Die Faserzementplatten sind üblicherweise zwischen 3 und 20 mm dick hergestellt.

Faserzementplatten und Siding Boards müssen gehärtet werden. Dies geschieht meist in einer befeuchteten Wärmekammer mit oder ohne Druck. Bei Temperaturen oberhalb von 30°C bis ca. 70°C findet die Aushärtung des Zements beschleunigt in einigen Stunden statt, um ein Material mit ausreichender Festigkeit gegen Zerbrechen zu

erhalten. Die Aushärtung kann auch in einem Autoklav unter Druck erfolgen, dann kann die Temperatur auch deutlich höher sein, da kein Wasser entweichen kann und der Zement nicht "verbrennen" kann. Das für die Hydratisierung des Zements notwendige Wasser verdunstet nicht. Bei der Autoklavhärtung wird zum Beispiel bei über 100°C bis ca. 180°C gearbeitet.

Nachteilig an mineralischen Oberflächen und mineralischen Formkörpern, wie Faserzementplatten ist, dass unter dem Einfluss der Witterung (insbesondere der Einwirkung von Wasser) die kationischen Bestandteile wie $Ca^{2+}$ im Laufe der Zeit herausgelöst werden, was ihre Festigkeit mindert. Eine weitere nachteilige Eigenschaft mineralischer Oberflächen ist das Auftreten von Ausblüherscheinungen. Diese sind vermutlich darauf zurückzuführen, dass die mineralischen Bindemittel mehrwertige Kationen wie $Ca^{2+}$ in alkalischer Umgebung enthalten. Durch Reaktion mit dem Kohlendioxid aus der Luft können sich so an der Oberfläche der mineralischen Formkörper in Wasser schwerlösliche, unansehnliche weiße Kalkflecken ausbilden. Das Erscheinungsbild des Ausblühens kann sowohl bereits während des Erhärtens von frisch zubereiteten mineralischen Formkörpern als auch unter der Einwirkung der Witterung auf bereits erhärteten mineralischen Formkörpern auftreten.

Zur Vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als filmbildenden Bestandteil eine wässrige Polymerisatdispersion enthalten. Übliche Bindemittel umfassen Styrol/Acrylester-Copolymerisate, Homo- und Copolymerisate des Vinylacetats, Reinacrylate und ähnliche (vgl. z. B. DE 21 64 256). Die damit erhältlichen Beschichtungen vermochten jedoch den Durchtritt der kationischen Bestandteile (Ausblühen) nicht in befriedigender Weise zu verhindern. Zudem schmutzen derartige Beschichtungen leicht an.

Da Kalkausblühungen schon bei der Abbindung des Zements entstehen, kann es sinnvoll sein, die Beschichtung als Ausblühschutz schon auf dem noch nicht gehärteten Beton oder Zement, der als grüner Beton bezeichnet wird, zu applizieren. Nach der Härtung bzw. Abbindung kann gegebenenfalls noch eine zweite oder weitere Beschichtungen mit einer Farbe oder einem Klarlack und jeweils anschließender Trocknung erfolgen. In anderen Fällen wird der Ausblühschutz nur nach der Aushärtung des Substrats beschichtet.

Der Schutz mineralischer Oberflächen und Formkörper vor den oben beschriebenen Ausblühungen konnte auch durch Beschichtungsmassen auf der Basis von Styrol/Acrylat-Dispersionen bzw. Reinacrylatdispersionen der EP-A 469 295 und der DE-A 195 14 266 verbessert werden. Hierfür empfiehlt die EP-A 469 295 die Verwendung eines speziellen anionischen Emulgators und die DE-A 195 14 266 die Verwendung von Polymerisaten, welche spezielle Monomere mit Sulfonatgruppen einpolymerisiert enthalten.

In der DE 103 43 726 werden beschichtete Betonformkörper offenbart, die sich durch guten Ausblühschutz durch die Verwendung einer wässrigen Polymerdispersion und einem anionischen Emulgator mit mindestens einer Phosphat- und/oder Phosphonatgruppe auszeichnen.

Die EP 915 071 offenbart Beschichtungen auf der Basis von Copolymeren ethylenisch ungesättigter Monomere enthaltend mehr als 0,2 bis 5 Gew.-% Itaconsäure.

Verfahren zur Konservierung von Betondachsteinen mit einer wässrigen Polymerisatdispersion enthaltend ein Polymerisat P, dass vorzugsweise 2-Acrylamido-2-methyl-propansulfonsäure in radikalisch polymerisierter Form einpolymerisiert enthält, werden in der EP 821 660 offenbart.

Die EP 623 659 offenbart mehrstufige Polymerdispersionen und deren Verwendung in Beschichtungsmitteln. Die dort offenbarten Dispersionen enthalten jedoch kein Monomeres der allgemeinen Formel I.

EP 1 466 929 offenbart Mehrstufen-Latexpolymerisate sowie deren Verwendung in Beschichtungszusammensetzungen bzw. als "Schutzschicht" unter anderem für Faserzement.

WO 03/031526 offenbart Mehrstufen-Latexpolymere mit einem Tg-Gefälle und deren Verwendung.

EP 894 780 offenbart Beschichtungsmassen für mineralische Formkörper, wie z.B. Faserzementplatten enthaltend ein Polymer P2, bei dem es sich um ein Mehrstufenpolymerisat handelt. In der EP 1 948 574 wird ein beschichteter Faserzementgegenstand offenbart, der mit einem stoßfesten Mehrstufen-Latexpolymer als Deckbeschichtungszusammensetzung beschichtet ist. Das Mehrstufen-Latexpolymer weist ein Tg-Gefälle auf.

EP1 518 846 offenbart ebenfalls wässrige Polymerdispersionen zur Beschichtung von Betonformkörpern enthaltend einen phosphat -oder phosphonathaltigen Emulgator, die gegebenenfalls durch Mehrstufenpolymerisation hergestellt werden können.

DE 10 2005 032195 offenbart Kunststoff-Dispersionen auf Basis eines Vinylester Copolymerisats und einer Weichphase mit einer Tg von 0 bis 20 °C.

EP 2 017 313 offenbart Polyvinylesterdispersionen mit verbesserter Witterungsbeständigkeit.

WO 2009/080614 offenbart einstufige Polymerisate und deren Verwendung für mineralische Beschichtungen.

Keines der im Stand der Technik offenbarten Mehrstufenpolymerisate enthält ein Monomeres der allgemeinen Formel I sowie die erfindungsgemäß beanspruchten Glasübergangstemperaturen und Phasenverhältnisse.

Faserzementplatten werden nach ihrer Herstellung und Aushärtung oft mit einer wäßrigen Dispersion oder Farbe auf Basis eines wäßrigen Acrylatbindemittels beschichtet, um den notwendigen Ausblühschutz zu erhalten. Die Beschichtung kann durch tauchen, Aufsprühen, Walzen oder Bürsten oder durch einen sogenannten Gießvorhang oder

"Curtain Coater" aufgetragen werden. Manchmal werden auch die Rückseite und die Kanten der Faserzementplatte beschichtet. Nach Beschichtung und Trocknung werden die Faserzementplatten meist in noch warmem Zustand aufeinander abgestapelt. Dabei kann es zu Verklebungen der beschichteten Platten untereinander kommen, da die Bindemittel der Beschichtung zu weich sein können und damit nicht blockfest genug sind.

Die einstufigen Bindemittel in Beschichtungen des Standes der Technik haben den Nachteil, dass sie zur Erzielung guter Blockfestigkeit häufig zu hart sind und deshalb ohne Lösemittel oder Filmbildehilfsmittel nicht zu formulieren sind. Auch ist der Ausblühschutz derartiger Beschichtungen häufig verbesserungswürdig. Diese Beschichtungen können bei Bewitterung im Freien leicht Risse bekommen und matt werden, weisen also keine sehr gute Witterungsbeständigkeit auf.

Die zweistufigen Bindemittel des Standes der Technik geben zwar eine zufriedenstellende Blockbeständigkeit durch ihren Anteil an Hartphase. Ihre Witterungsbeständigkeit genügt allerdings nicht den Ansprüchen.

Der vorliegenden Erfindung lag somit die Aufgabe zugrunde, Bindemittel sowie Beschichtungsmittel, insbesondere zur Beschichtung von mineralischen Formkörpern, wie Faserzementbeschichtungen bereitzustellen, die eine erhöhte Wetterbeständigkeit aufzeigen und sich zudem durch eine ausgezeichnete Blockresistenz und einen hervorragenden Ausblühschutz auszeichnen.

Überraschenderweise wurde gefunden, dass mehrstufige Polymerisatdispersionen, erhältlich durch radikalisch initiierte wässrige Emulsionspolymerisation, mit einer Weich- und einer Hartphase und einem Stufenverhältnis von Hart- zu Weichphase von 25 bis 95 Gew.-% zu 75 bis 5 Gew.-% (bezogen auf Polymermasse), wobei die Glasübergangstemperatur der Weichphase als erster Stufe -30 bis 0 °C und die der Hartphase als zweiter Stufe 20 bis 60 °C beträgt, enthaltend wenigstens ein Monomeres der allgemeinen Formel I

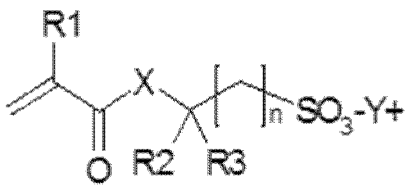

(I)

in der die Variablen folgende Bedeutung haben:

n = 0 bis 2,
R1, R2, R3 = unabhängig voneinander Wasserstoff oder Methylgruppe,
X = O oder NH,
Y = H, Alkalimetall, $NH_4$, dadurch gekennzeichnet, dass es sich bei dem Polymerisat der ersten Stufe um ein Copolymer handelt, welches

(i) in einer Menge von 5 bis 50 Gew.%, bezogen auf 100 Gew.-Teile der insgesamt in der ersten und zweiten Stufe zu polymerisierenden Monomeren, eingesetzt wird, und welches

(ii) zu mindestens 80 Gew.-% und bis zu 99 Gew-% aus Hauptmonomeren aufgebaut ist, welche ausgewählt sind aus der Gruppe bestehend aus C1- bis C10-Alkyl(meth)acrylaten, Amiden und Hydroxyalkylestern der $\alpha,\beta$-ungesättigten $C_3$-$C_6$-Carbonsäuren, besonders bevorzugt Acrylamid, Methacrylamid, 2-Hydroxyethyl-acrylat, 2-Hydroxyethylmethacrylat, 2-Hydroxypropyl(meth)acrylat oder 1,4-Butan-diolmonoacrylat und Mischungen dieser Monomeren, insbesondere n-Butylacrylat, Methylmethacrylat und Acrylamid, und

(iii) zu mindestens 0,1 Gew.% und bis zu 5 Gew-% Monomere I, welche vorzugsweise ausgewählt sind aus der Gruppe, -2-Acrylamido-2-methyl-propansulfonsäure (AMPS), Methacrylsäure-(3'-sulfopropyl)-ester, Acrylsäure-(3'-sulfopropyl)-ester, Methacrylsäure-(2'-sulfoethyl)-ester, enthält.

zu Beschichtungen mit erhöhter Wetterbeständigkeit, bei gleichzeitig exzellentem Ausblühschutz und Blockverhalten führen.

Als Substrate kommen sowohl industriell beschichtete zementäre Substrate (z.B. Faserzementplatten als auch anorganische/organische Substrate wie Fassaden in Frage. Die verbesserte Wetterbeständigkeit lässt sich auf eine sehr gute Verfilmung (niedrige MFT) bei gleichzeitig rel. hoher Filmhärte zurückführen und zeigt sich z.B. durch einen erhöhten Glanzerhalt nach UV/Wasser-Belastung (z.B. Sun-/Xenotest oder Außenbewitterung) für Klarlacke oder niedrig pigmentierte Beschichtungen bzw. eine gute Farbtonstabilität (Color Retention) bei höher pigmentierten Beschichtungen. Neben der guten Wetterbeständigkeit, zeigen die Systeme eine ausgezeichnete Blockresistenz und einen hervorragenden Ausblühschutz.

Vorzugsweise versteht man unter der erfindungsgemäßen wässrigen mehrstufigen Polymerisatdispersion eine wäßrige Polymerisatdispersion, deren Weichphase als erster Stufe eine Tg von -30 bis 0 °C, vorzugsweise von -20 bis 0°C und deren Hartphase als zweiter Stufe eine Tg von 20 bis 60 °C, vorzugsweise von 30 bis 50°C und ein Stufenverhältnis von hart zu weich von 25-95 : 25-5 aufweist.

Weiterhin betrifft die vorliegende Erfindung ein Verfahren zur Herstellung der erfindungsgemäßen wässrigen Polymerisatdispersion sowie deren Verwendung als Bindemittel für mineralische und nichtmineralische Stoffe sowie deren Verwendung in Beschichtungsmitteln, insbesondere zur Beschichtung von mineralischen Formkörpern, wie Faserzementbeschichtungen.

Ein weiterer Gegenstand der Erfindung sind Beschichtungen enthaltend die erfindungsgemäße wässrige Polymerisatdispersion sowie mineralische Formkörper enthaltend die erfindungsgemäßen Polymerisatdispersionen als Beschichtung.

Durch die Zugabe der Monomere I erhält man erheblich verbesserte Beschichtungen für mineralische Formkörper, insbesondere für Faserzementplatten.

Die erfindungsgemäß hergestellten Polymerdispersionen sind durch radikalische Emulsionspolymerisation von ethylenisch ungesättigten Verbindungen (Monomeren) erhältlich. In der ersten Stufe wird ein Polymerisat hergestellt aus Monomeren, welche mindestens ein Monomer I sowie gegebenenfalls ein Monomer mit mindestens einer Säuregruppe in einer Menge von 0,1 Gew.-Teilen, vorzugsweise von 0,5 bis 2,5 Gew.-Teilen bezogen auf die Gesamtmenge an Monomeren der ersten und zweiten Stufe, umfassen.

Die in der ersten Stufe eingesetzten Säuremonomere können mit Monomeren ohne Säuregruppe copolymerisiert werden. Das Polymerisat der ersten Stufe wird vorzugsweise gebildet aus mindestens 40 Gew.-%, unten näher definierten, nichtionischen Hauptmonomeren sowie aus einer zweiten Monomerart, ausgewählt aus ethylenisch ungesättigten Säuremonomeren. Das Polymerisat der ersten Stufe kann darüber hinaus optional aus weiteren, vorzugsweise nichtionischen Monomeren gebildet sein. Das Polymerisat der ersten Stufe ist vorzugsweise zu mindestens 40 Gew.-%, insbesondere von 60 bis 99 Gew.% oder von 80 bis 98 Gew.%, bezogen auf sämtliche Monomere der ersten Stufe, aus Hauptmonomeren aufgebaut, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren. Hauptmonomere für das Polymerisat der ersten Stufe sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht.

Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Hauptmonomere für das Polymerisat der ersten Stufe bevorzugt sind C1- bis C10-Alkylacrylate, C1- bis C10-Alkylmethacrylate, Vinylester von bis zu 20 C-Atome enthaltenden Carbonsäuren und Mischungen dieser Monomere, insbesondere $C_1$- bis $C_8$-Alkylacrylate und $C_1$- bis $C_8$-Alkylmethacrylate und Vinylester. Ganz besonders bevorzugt sind 2-Ethylhexylacrylat, Butylacrylat, Methylmethacrylat und Styrol.

Das Polymerisat der ersten Stufe enthält weiterhin gegebenenfalls 0,1 Gew.%, insbesondere von 0,5 bis 2,5 Gew.%, bezogen auf sämtliche Monomere der ersten Stufe, ethylenisch ungesättigten Säuremonomere. Ethylenisch ungesättigte Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha, beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure, Vinylmilchsäure und 2-Carboxyethylacrylat. Als ethylenisch ungesättigte Sulfonsäuren eignen sich beispielsweise Vinylsulfonsäure oder Styrolsulfonsäure. Bevorzugt sind Acrylsäure und Methacrylsäure oder deren Gemisch.

Desweiteren können als Monomere der ersten Stufe die Amide und die Hydroxyalkylester der $\alpha,\beta$-ungesättigten $C_3$-$C_6$-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat eingesetzt werden. Die Monomere können einzeln oder auch in Kombinationen von z.B. Säuren und Amiden eingesetzt werden.

Desweiteren werden als Monomere der ersten Stufe Monomere der allgemeinen Formel I eingesetzt.

Darunter versteht man beispielsweise:

- 2-Acrylamido-2-methyl-propansulfonsäure (AMPS)

- Methacrylsäure-(3'-sulfopropyl)-ester
- Acrylsäure-(3'-sulfopropyl)-ester
- Methacrylsäure-(2'-sulfoethyl)-ester

Unter den Alkalimetallsalzen der Monomeren der allgemeinen Formel I eignen sich insbesondere die Natrium-, Ammonium- und Kaliummetallsalze.

In einer bevorzugten Ausführungsform handelt es sich bei dem Polymerisat der ersten Stufe um ein Copolymer, welches

(i) in einer Menge von 5 bis 50 Gew.%, bezogen auf 100 Gew.-Teile der insgesamt in der ersten und zweiten Stufe zu polymerisierenden Monomeren, eingesetzt wird,

(ii) zu mindestens 80 Gew.-% und bis zu 99 Gew-% aus Hauptmonomeren aufgebaut ist, welche ausgewählt sind aus der Gruppe bestehend aus C1- bis C10-Alkyl(meth)acrylaten, Amiden und Hydroxyalkylestern der $\alpha,\beta$-ungesättigten $C_3$-$C_6$-Carbonsäuren, besonders bevorzugt Acrylamid, Methacrylamid, 2-Hydroxyethylacrylat, 2-Hydroxyethylmethacrylat, 2-Hy-droxypropyl(meth)acrylat oder 1,4-Butandiolmonoacrylat und Mischungen dieser Monomeren, insbesondere n-Butylacrylat, Methylmethacrylat und Acrylamid, und

(iii) zu mindestens 0,1 Gew.% und bis zu 5 Gew-% aus Monomeren I, welche vorzugsweise ausgewählt sind aus der Gruppe, -2-Acrylamido-2-methyl-propansulfonsäure (AMPS)

- Methacrylsäure-(3'-sulfopropyl)-ester
- Acrylsäure-(3'-sulfopropyl)-ester
- Methacrylsäure-(2'-sulfoethyl)-ester.

In einer bevorzugten Ausführungsform der Erfindung erfolgt die Polymerisation der ersten Stufe in Gegenwart von Saatlatex. Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,05 bis 5 Gew.%, besonders bevorzugt von 0,1 bis 3 Gew.%, bezogen auf die Gesamtmonomermenge der ersten und zweiten Stufe. Geeignet ist z.B. ein Latex auf Basis von Polystyrol oder auf Basis von Polymethylmethacrylat. Ein bevorzugter Saatlatex ist Polystyrolsaat.

Bei den für die Polymerisation der zweiten Stufe eingesetzten Monomeren handelt es sich vorzugsweise zu mindestens 60 Gew.-%, bevorzugt zu mindestens 80 Gew.-%, z.B. von 80 bis 100 Gew.%, besonders bevorzugt zu mindestens 95 Gew.-%, bezogen auf die Gesamtmenge der Monomere der zweiten Stufe, aus einem oder mehreren der nachfolgend beschriebenen Hauptmonomeren. Die Hauptmonomeren sind ausgewählt aus der Gruppe bestehend aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem $C_1$-$C_{10}$-Alkylrest, wie Methyl- methacrylat, Methylacrylat, n-Butylacrylat, n-Butylmethacrylat, Ethylacrylat und 2-Ethyl- hexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt.

Als Hauptmonomere für die Polymerisation der zweiten Stufe bevorzugt sind die $C_1$- bis $C_{10}$-Alkylacrylate und $C_1$- bis $C_{10}$-Alkylmethacrylate, insbesondere $C_1$- bis $C_8$-Alkylacrylate und $C_1$-bis $C_{10}$-Alkylmethacrylate und Vinylaromaten, insbesondere Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat, Styrol, Vinylacetat sowie Mischungen dieser Monomere.

Neben den Hauptmonomeren können die Monomere für die Polymerisation der zweiten Stufe weitere Monomere umfassen, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch Hydroxylgruppen enthaltende Monomere, insbesondere $C_1$-$C_{10}$-Hydroxyalkyl(meth)acrylate

sowie (Meth)acrylamid. Als weitere Monomere seien darüber hinaus Phenyloxyethylglykolmono- (meth-)acrylat, Glycidylacrylat, Glycidylmethacrylat, Amino-(meth-)acrylate wie 2-Aminoethyl- (meth)acrylat genannt. Als weitere Monomere seien auch vernetzende Monomere genannt.

Das Polymerisat der zweiten Stufe enthält weiterhin gegebenenfalls 0,1 Gew.%, insbesondere von 0,5 bis 2,5 Gew.%, bezogen auf sämtliche Monomere der zweiten Stufe, ethylenisch ungesättigten Säuremonomere. Ethylenisch ungesättigte Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha, beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure, Vinylmilchsäure und 2-Carboxyethylacrylat. Als ethylenisch ungesättigte Sulfonsäuren eignen sich beispielsweise Vinylsulfonsäure oder Styrolsulfonsäure. Bevorzugt sind Acrylsäure und Methacrylsäure und deren Gemisch.

Desweiteren können als Monomere der zweiten Stufe die Amide und die Hydroxyalkylester der $\alpha,\beta$-ungesättigten $C_3$-$C_6$-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat eingesetzt werden. Die Monomere können einzeln oder auch in Kombinationen von z.B. Säuren und Amiden eingesetzt werden.

Desweiteren werden als Monomere der zweiten Stufe ebenfalls Monomere der allgemeinen Formel I eingesetzt.

Darunter versteht man beispielsweise:

- 2-Acrylamido-2-methyl-propansulfonsäure (AMPS)
- Methacrylsäure-(3'-sulfopropyl)-ester
- Acrylsäure-(3'-sulfopropyl)-ester
- Methacrylsäure-(2'-sulfoethyl)-ester

Unter den Alkalimetallsalzen der Monomeren der allgemeinen Formel I eignen sich insbesondere die Natrium-, Ammonium- und Kaliummetallsalze.

Insbesondere sind die Monomere für die Polymerisation der zweiten Stufe zu mindestens 60 Gew.-%, besonders bevorzugt zu mindestens 80 Gew.-%, z.B. von 60 bis 99 Gew.%, und ganz besonders bevorzugt zu mindestens 95 Gew.-% ausgewählt aus mindestens einem $C_1$ bis $C_{20}$ Alkylacrylat, mindestens einem $C_1$ bis $C_{20}$ Alkylmethacrylat, deren Gemisch oder deren Gemisch mit mindestens einem weiteren Monomeren, ausgewählt aus Amiden und die Hydroxyalkylester der $\alpha,\beta$-ungesättigten $C_3$-$C_6$-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat

Die Monomere der Polymerisation der ersten Stufe sind so ausgewählt, dass die für ein aus den Monomeren der ersten Stufe hergestelltes Polymer berechnete Glasübergangstemperatur -30 °C bis 0 °C beträgt, und die für ein aus den Monomeren der zweiten Stufe hergestelltes Polymer berechnete Glasübergangstemperatur 20°C bis 60 °C beträgt.

Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die tatsächliche Glasübergangstemperatur lässt sich bestimmen durch Differential Scanning Calorimetrie (ASTM D 3418-08, sogenannte "midpoint temperature"). Das Gewichtsverhältnis der Menge der in der ersten Stufe eingesetzten Monomere zur Menge der in der zweiten Stufe eingesetzten Monomere beträgt vorzugsweise von 5:95 bis 50:50.

Bei der Herstellung der erfindungsgemäßen Polymerdispersionen kann zusätzlich zu den zuvor genannten Monomeren wenigstens ein Vernetzer eingesetzt werden. Monomere, die eine vernetzende Funktion besitzen, sind Verbindungen mit mindestens zwei polymerisierbaren, ethylenisch ungesättigten, nichtkonjugierten Doppelbindungen

im Molekül. Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein, zur Vernetzung kann aber auch ein Vernetzer eingesetzt werden, der befähigt ist, mit funktionellen Gruppen des Emulsionspolymerisats eine chemische Vernetzungsreaktion eingehen zu können.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten $C_3$-$C_6$-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure. Ein bevorzugter Vernetzer ist Allylmethacrylat.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden wasserlösliche Vernetzer eingesetzt.

Weiterhin zählen zu den vernetzenden Monomeren auch solche, die neben einer ethylenisch ungesättigten Doppelbindung eine reaktive funktionelle Gruppe, z. B. eine Aldehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B. (Meth)acryloxyalkylpropanale, wie sie in der DE-A-2722097 beschrieben sind. Des Weiteren

eignen sich auch N-Oxoalkyl(meth)acrylamide wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um eine Verbindung mit mindestens 2 funktionellen Gruppen, insbesondere 2 bis 5 funktionellen Gruppen, die mit den funktionellen Gruppen des Polymerisats, speziell den Keto- oder Aldehydgruppen eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid. Geeignete Verbindungen mit Hydroxylamin- oder Oximethergruppen sind z. B. in WO 93/25588 genannt.

Weitere geeignete Vernetzer, die sowohl in der Polymerisation der ersten Stufe, als auch der zweiten Stufe, so wie danach eingesetzt werden können, sind beispielsweise Acetoacetoxyalkyl(meth)acrylate, N-Vinylpyrolidon, N-(2-Methacryloyloxyethyl)ethylenharnstoff, N-(2-Acryloyloxyethyl)-ethylenharnstoff, 2-Acetoacetoxyethylacrylat, 2-Acetoacetoxyethylmethacrylat, Diacetonacrylamid.

Die vernetzende Komponente wird vorzugsweise in einer Menge von 0,0005 bis 5 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt. Die Vernetzer können sowohl nur in der ersten, als auch nur in der zweiten Stufe oder auch in beiden Stufen eingesetzt werden.

Die radikalische Polymerisation des Monomergemischs M) kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide, wie Tetrachlormethan, Chloroform, Bromtrichlormethan, Bromoform, Allylbromid und Benzylverbindungen, wie Benzylchlorid oder Benzylbromid.

Weitere geeignete Regler sind Allylverbindungen, wie z. B. Allylalkohol, funktionalisierte Allylether, wie Allylethoxylate, Alkylallylether, oder Glycerinmonoallylether.

Bevorzugt werden als Regler Verbindungen eingesetzt, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropy-ldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder tert. bzw. n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bis-thioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft Polymerdispersionen, die durch radikalische Emulsionspolymerisation ohne Zusatz eines Reglers hergestellt werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Di-lauroylperoxid, tert.-Butylperisobutyrat, tert.-Butylperacetat, Di-tert.-Amylperoxid, tert.-Butylhydroperoxid, Azo-bis-isobutyronitril, 2,2'-Azo-bis-(2-amidinopropan)dihydrochlorid oder 2,2'-Azo- bis-(2-methyl-butyronitril). Geeignet sind auch Gemische dieser Initiatoren.

Als Initiatoren können auch Reduktions/Oxidations-(= Red/Ox)-Initiator Systeme eingesetzt werden. Die Red/Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red/Ox-Initiator-Systeme können unter Mitverwendung löslicher Metallverbindungen, deren metallische Komponente in mehreren Wertigkeitsstufen auftreten kann, verwendet werden. Übliche Red/Ox-Initiator-Systeme sind z. B. Ascorbinsäure/Eisen(II)-sulfat/Natriumperoxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Herstellung der Polymerdispersion, erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z.B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-$C_6$-$C_{20}$-Alkylpyridinen, -morpholinen oder -imidazolen, z. B. N-Laurylpyridiniumchlorid.

Die Menge an Emulgator beträgt im Allgemeinen etwa 0,01 bis 10 Gew.-%, bevorzugt 0,1 bis 5 Gew.-%, bezogen auf die Menge an zu polymerisierenden Monomeren.

Vorzugsweise erfolgt die Neutralisation von Säuregruppen des ersten Polymerisats durch zumindest teilweisen Zulauf eines Neutralisationsmittels während der Polymerisation der zweiten Stufe, wobei der Zulauf an Neutralisationsmittel vorzugsweise parallel zum Monomerzulauf erfolgt. Das Neutralisationsmittel kann dabei in einem gemeinsamen Zulauf mit den zu polymerisierenden Monomeren oder in einem separaten Zulauf zugegeben werden. Nach Zulauf sämtlicher Monomere ist vorzugsweise die zur Neutralisation von mindestens 10%, vorzugsweise 30 bis 100% oder 30

bis 90% Säureäquivalenten benötigte Menge an Neutralisationsmittel in dem Polymerisationsgefäß enthalten.

Die Emulsionspolymerisation erfolgt in der Regel bei 30 bis 130°C, vorzugsweise bei 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation der ersten Stufe kann sowohl als Batchprozess als auch in Form eines Zulaufverfahrens, einschließlich Stufen- oder Gradientenfahrweise, durchgeführt werden. Bei der Polymerisation wird zur besseren Einstellung der Teilchengröße bevorzugte eine Polymersaat vorgelegt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-%, besonders bevorzugt größer oder gleich 50 Gew.-% erhalten. Für eine hohe Raum/ Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Häufig ist es vorteilhaft, wenn die nach Abschluss der Polymerisationsstufen erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

In einer Ausführungsform der Erfindung wird in beiden Stufen ein Silanmonomer eingesetzt, wie beispielsweise Vinyltrialkoxisilane, z. B. Vinyltrimethoxisilan, Alkylvinyldialkoxisilane, z. B. Methylvinyldialkoxisilan, oder (Meth)acryloxyalkyltrialkoxisilane, z. B. (Meth)acryloxypropyltrimethoxysilan und (Meth)acryloxypropyltriethoxysilan. Diese Silanmonomere können in Mengen von bis zu 2 Gew.-%, vorzugsweise 0,05 bis 1 Gew.-%, bezogen auf das Gesamtgewicht der Monomere, eingesetzt werden.

Die nach dem erfindungsgemäßen Verfahren zugänglichen wässrigen Polymerisatdispersionen weisen Polymerisatteilchen auf, die eine gewichtsmittlere Teilchendurchmesser $D_w$ im Bereich > 50 und < 500 nm, bevorzugt > 70 und < 300 nm und insbesondere bevorzugt > 80 nm bis ≤ 200 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponente bei der Herstellung von Beschichtungsmitteln für organische Substrate sowie zur Modifizierung von mineralischen Bindemitteln einsetzen.

Die wässrige Polymerdispersion weist üblicherweise einen Feststoffgehalt von 20 bis 70 Gew.- %, vorzugsweise 40 bis 65 Gew.-%, auf.

Die wäßrige Dispersion des Polymerisats kann im Rahmen des erfindungsgemäßen Verfahrens sowohl für

sich, als auch mit Zusätzen versehen zur Konservierung eines mineralischen Formkörpers (z.B. Faserzementplatten) eingesetzt werden. Solche Zusätze können sein: ein aromatisches Keton wie Benzophenon gemäß der DE-A 38 27 975 als Photoinitiator zum Zweck einer Vernetzung unter Einwirkung elektromagnetischer Strahlung, oder ein wasserlösliches Dihydrazid, gemäß der DE-A 39 01 073, wenn das Polymerisat Carbonylgruppen aufweisende Monomere einpolymerisiert enthält.

Ferner können die erfindungsgemäß zur Anwendung kommenden wässrigen Zubereitungen auch vernetzende Zusätze enthalten. Derartige Zusätze können sein: aromatische Ketone, z. B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind z. B. aus der DE-A 38 27 975 und der EP-A 417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A 39 01 073, wenn das Copolymer Carbonylgruppen enthaltende Monomere einpolymerisiert enthält.

In einer bevorzugten Ausführungsform der vorliegenden Erfindung werden die wässrigen Zubereitungen in Form eines Klarlacks eingesetzt. Sie enthalten dann in der Regel, bezogen auf ihr Gesamtgewicht, 10 bis 60 Gew.-%, vorzugsweise 40 bis 55 Gew.-% wenigstens eines Copolymers P und 0,1 bis 30 Gew.-%, vorzugsweise 0,5 bis 10 Gew.-% übliche Hilfsmittel, insbesondere Entschäumer und/oder Filmbildehilfsmittel.

In einer anderen Ausführungsform der vorliegenden Erfindung werden die wässrigen Zubereitungen in Form pigment- und/oder füllstoffhaltiger Zubereitungen eingesetzt. In diesem Fall liegt der Gesamtgehalt an Copolymer in der wässrigen Zubereitung im Bereich von 10 bis 60 Gew.- %, vorzugsweise im Bereich von 20 bis 40 Gew.-%, der Gehalt an Hilfsmitteln im Bereich von 0,1 bis 30 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Copolymer P in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten.

Besonders häufig wird die wäßrige Dispersion des Polymerisats in pigmentierter Form zur Konservierung angewendet. Typische Weißpigmente sind beispielsweise Titandioxid, vorzugsweise in der Rutilform, Bariumsulfat, Zinkoxid oder Lithopone (Zinksulfid + Bariumsulfat). Zu dekorativen Zwecken können die Zubereitungen auch farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten.

Ferner kommen als Pigmente (vielfach auch als Füllstoffe bezeichnet) z.B. Bariumsulfat, Talkum, Glimmer, Calciumcarbonat, Dolomit, Quarzmehl und deren Gemische in Betracht.

Die erfindungsgemäßen Klarlacke und pigmentierten Farben können weitere übliche Hilfsmittel enthalten, wie z. B. Netzmittel, Topf- und Filmkonservierungsmittel, Ver-dicker, Entschäumer, Fungizide, Algizide, Verlaufsförderer und Gefrierschutzmittel in den an sich üblichen Mengen.

In der Regel beträgt die Menge an eingesetztem Dispergiermittel 0,5 bis 6, vorzugsweise 1 bis 3 Gew.-% bezogen auf die Menge der radikalisch zu polymerisierenden Monomeren.

Üblicherweise beträgt die Auftragsmenge der zur Konservierung aufzubringenden wäßrigen Polymerisatzubereitung 50 bis 400 g/m2 (nass gerechnet). Der Auftrag kann in an sich bekannter Weise durch Spritzen, Spachteln, Rakeln, Rollen oder Gießen erfolgen. Wesentlich ist, dass das erfindungsgemäße Verfahren sowohl bei bereits erhärteten als auch bei gerade frisch zubereiteten ("grünen") mineralischen Formkörpern, wie Faserzementplatten angewendet werden kann. Mitunter wird ein weiterer Auftrag mit Beschichtungsmasse nach der Aushärtung mit anschließender Trocknung vorgenommen.

Beispiele

1) Vergleichsdispersion Tg(theo.) = 44°C

In einem mit Dosiereinrichtung und Temperaturregelung ausgerüsteten Polymerisationsgefäß wurden vorgelegt:

Vorlage:

| | |
|---|---|
| 402,1 g | Wasser |
| 13,26 g | 20% wßr. Lsg. von $C_{16-18}$-Fettalkoholpolyethoxylat |
| 8,71 g | 45% wßr. Lsg. von Dodecyldiphenylether-disulfonsäure Natriumsalz |

In einem Zulaufgefäß wurde eine Emulsion aus folgenden Komponenten hergestellt:

| | |
|---|---|
| 560,2 g | Wasser |
| 19,89 g | 20% wßr. Lsg. von C16-18-Fettalkoholpolyethoxylat |
| 34,85 g | 45% wßr. Lsg. von Dodecyldiphenylether-disulfonsäure Natriumsalz |
| 5,23 g | 50% wßr. Lsg. 2-Acrylamido-2-methylpropansulfonsäure |
| 13,07 g | 50% wßr. Lsg. von Acrylamid |
| 392,0 g | n-Butylacrylat |
| 908,2 g | Methylmethacrylat |

In einem dritten Zulaufgefäß wurden bereitgestellt: Zulauf 3

| | |
|---|---|
| 56,00 g | 7% wßr. Lsg. von Natriumperoxodisulfat |

Die Vorlage wurde ohne die 50% wßr. Lsg. 2-Acrylamido-2-methylpropansulfonsäure auf 95 °C (Außentemperatur; Polymerisationstemperatur 90 °C, Rührgeschwindigkeit 150 Upm) erwärmt. Die 50% wßr. Lsg. 2-Acrylamido-2-methylpropansulfonsäure wurde zugegeben und 15 min. gerührt. Dann wurde Zulauf 1 und Zulauf 2 gestartet. Zulauf 1 wurde in 3 h, Zulauf 2 in 3,5 h zudosiert. Die Rührgeschwindigkeit wurde auf 100 Upm gedrosselt und 30 min. nachgerührt.

Innerhalb von 30 min wurden 11.7 g einer 10% wßr. Lsg. von tert-Butylhydroperoxid und 9.1 g einer 10% wßr. Lsg. von Hydroxymethansulfinsäure zudosiert. Es wurde 2,61 einer 5% wßr. Wasserstoffperoxidlösung zugegeben und 10 min gerührt. Nach dem Abkühlen wurde mit 1,57 g 25% wßr. $NH_3$ neutralisiert und 161,77 Wasser zugegeben. Es wurden 2620 g einer 51.6%igen wßr. Dispersion erhalten.

2) Vergleichsdispersion (Zweistufig) (ohne erfindungsgemäße Monomere I):

In einem mit Dosiereinrichtung und Temperaturregelung ausgerüsteten Polymerisationsgefäß wurden vorgelegt:

Vorlage:

| | |
|---|---|
| 389,7 g | Wasser |
| 51,07 g | Polystyrolsaatlatex (33% in Wasser) |

In einem ersten Zulaufgefäß wurde eine Emulsion aus folgenden Komponenten hergestellt:

| Zulauf 1 | |
|---|---|
| 323,9 g | Wasser |
| 9,7 g | 20% wßr. Lsg. von C16-18-Fettalkoholpolyethoxylat |
| 23,15 g | 28% wßr. Lsg. von Natriumlauryl-polyethoxysulfat |
| 9,07 g | 50% wßr. Lsg. von Acrylsäure |
| 462,3 g | n-Butylacrylat |
| 178,8 g | Methylmethacrylat |

In einem zweiten Zulaufgefäß wurde eine Emulsion aus folgenden Komponenten hergestellt:

| Zulauf 2 | |
|---|---|
| 320,7 g | Wasser |
| 9.7 g | 20% wßr. Lsg. von C16-18-Fettalkoholpolyethoxylat |
| 23.15 g | 28% wßr. Lsg. von Natriumlauryl-polyethoxysulfat |
| 10,37 g | 50% wßr. Lsg. von Acrylamid |
| 9,07 g | 50% wßr. Lsg. von Acrylsäure |
| 210,0 g | n-Butylacrylat |

(fortgesetzt)

| | |
|---|---|
| Zulauf 2 | |
| 431,0 g | Methylmethacrylat |

In einem dritten Zulaufgefäß wurden bereitgestellt:

| | |
|---|---|
| Zulauf 3 | |
| 55.6 g | 7% wßr. Lsg. von Natriumperoxodisulfat |

Die Vorlage wurde auf (Außentemperatur: 90 °C, Polymerisationstemperatur: 83 °C, Rührgeschwindigkeit: 150 Upm) erwärmt. Zulauf 1 und 3 wurde gleichzeitig gestartet. Der Zulauf 1 wurde in 1,5 h und anschließend der Zulauf 2 in 1,5 h zudosiert. Zulauf 3 wurde in 3 h zudosiert. Anschließend wurde 30 min. gerührt und danach innerhalb 1 h 11.7 g einer 10% wßr. Lsg. Von tert-Butylhydroperoxid und 9.1 g einer 10% wßr. Lsg. von Hydroxymethansulfinsäure zudosiert.

Anschließend wurde mit 55,09 g einer 2% wßr. NaOH neutralisiert, 10 min. gerührt, die Rührgeschwindigkeit auf 100 Upm reduziert und abgekühlt. Danach wurden 2.6 g einer 5% wßr. Wasserstoffperoxidlösung sowie 78,78 g Wasser zugegeben. Es wurden 2674 g einer 49,9%igen Dispersion erhalten.

3) Beispieldispersion (Zweistufig), erfindungsgemäß mit Monomeren I:

In einem mit Dosiereinrichtung und Temperaturregelung ausgerüsteten Polymerisationsgefäß wurden vorgelegt:

Vorlage:

| | |
|---|---|
| 389,7 g | Wasser |
| 51,07 g | Polystyrolsaatlatex (33% in Wasser) |

In einem ersten Zulaufgefäß wurde eine Emulsion aus folgenden Komponenten hergestellt:

| | |
|---|---|
| Zulauf 1 | |
| 323,9 g | Wasser |
| 9,7 g | 20% wßr. Lsg. von C16-18-Fettalkoholpolyethoxylat |
| 23,15 g | 28% wßr. Lsg. von Natriumlauryl-polyethoxysulfat |
| 9,07 g | 50% wßr. Lsg. von 2-Acrylamido-2-methlypropansulfonsäure |
| 462,3 g | n-Butylacrylat |
| 178,8 g | Methylmethacrylat |

In einem zweiten Zulaufgefäß wurde eine Emulsion aus folgenden Komponenten hergestellt:

| | |
|---|---|
| Zulauf 2 | |
| 320,7 g | Wasser |
| 9.7 g | 20% wßr. Lsg. von $C_{16-18}$-Fettalkoholpolyethoxylat |
| 23.15 g | 28% wßr. Lsg. von Natriumlauryl-polyethoxysulfat |
| 10,37 g | 50% wßr. Lsg. von Acrylamid |
| 9,07 g | 50% wßr. Lsg. von 2-Acrylamido-2-methlypropansulfonsäure |
| 210,0 g | n-Butylacrylat |
| 431,0 g | Methylmethacrylat |

In einem dritten Zulaufgefäß wurden bereitgestellt:

| | |
|---|---|
| Zulauf 3 | |
| 55.6 g | 7% wßr. Lsg. von Natriumperoxodisulfat |

Die Vorlage wurde auf (Außentemperatur: 90 °C, Polymerisationstemperatur: 83 °C, Rührgeschwindigkeit: 150 Upm) erwärmt. Zulauf 1 und 3 wurde gleichzeitig gestartet. Der Zulauf 1 wurde in 1,5 h und anschließend der Zulauf 2 in 1,5 h zudosiert. Zulauf 3 wurde in 3 h zudosiert. Anschließend wurde 30 min. gerührt und danach innerhalb 1 h 11.7 g einer 10% wßr. Lsg. Von tert-Butylhydroperoxid und 9.1 g einer 10% wßr. Lsg. von Hydroxymethansulfinsäure zudosiert. Anschließend wurde mit 55,09 g einer 2% wßr. NaOH neutralisiert, 10 min. gerührt, die Rührgeschwindigkeit auf 100 Upm reduziert und abgekühlt. Danach wurden 2.6 g einer 5% wßr. Wasserstoffperoxidlösung sowie 78,78 g Wasser zugegeben. Es wurden 2674 g einer 49,9%igen Dispersion erhalten.

4) Beispieldispersion (Zweistufig), erfindungsgemäß mit Monomeren I, mehr Hartphase:

In einem mit Dosiereinrichtung und Temperaturregelung ausgerüsteten Polymerisationsgefäß wurden vorgelegt:

Vorlage:

| | |
|---|---|
| 389,7 g | Wasser |
| 51,07 g | Polystyrolsaatlatex (33% in Wasser) |

In einem ersten Zulaufgefäß wurde eine Emulsion aus folgenden Komponenten hergestellt:

| | |
|---|---|
| Zulauf 1 | |
| 129,6 g | Wasser |
| 3,89 g | 20% wßr. Lsg. von C16-18-Fettalkoholpolyethoxylat |
| 9,26 g | 28% wßr. Lsg. von Natriumlauryl-polyethoxysulfat |
| 3,63 g | 50% wßr. Lsg. von 2-Acrylamido-2-methlypropansulfonsäure |
| 184,9 g | n-Butylacrylat |
| 71,50 g | Methylmethacrylat |

In einem zweiten Zulaufgefäß wurde eine Emulsion aus folgenden Komponenten hergestellt:

| | |
|---|---|
| Zulauf 2 | |
| 515,0 g | Wasser |
| 15,56 g | 20% wßr. Lsg. von C16-18-Fettalkoholpolyethoxylat |
| 37,04 g | 28% wßr. Lsg. von Natriumlauryl-polyethoxysulfat |
| 10,37 g | 50% wßr. Lsg. von Acrylamid |
| 14,52 g | 50% wßr. Lsg. von 2-Acrylamido-2-methlypropansulfonsäure |
| 336,0 g | n-Butylacrylat |
| 689,6 g | Methylmethacrylat |

In einem dritten Zulaufgefäß wurden bereitgestellt:

| | |
|---|---|
| Zulauf 3 | |
| 55.6 g | 7% wßr. Lsg. von Natriumperoxodisulfat |

Die Vorlage wurde auf (Außentemperatur: 90 °C, Polymerisationstemperatur: 83 °C, Rührgeschwindigkeit: 150 Upm) erwärmt. Zulauf 1 und 3 wurde gleichzeitig gestartet. Der Zulauf 1 wurde in 36 min und anschließend der Zulauf 2 in 2 h 24 min zudosiert. Zulauf 3 wurde in 3 h zudosiert. Anschließend wurde 30 min. gerührt und danach innerhalb 1 h 11.7 g einer 10% wßr. Lsg. von tert-Butylhydroperoxid und 9.1 g einer 10% wßr. Lsg. von Hydroxymethansulfinsäure zudosiert. Anschließend wurde mit 55,09 g einer 2% wßr. NaOH neutralisiert, 10 min. gerührt, die Rührgeschwindigkeit

auf 100 Upm reduziert und abgekühlt. Danach wurden 2.6 g einer 5% wßr. Wasserstoffperoxidlösung sowie 78,78 g Wasser zugegeben. Es wurden 2674 g einer 49,7%igen Dispersion erhalten.

5) Beispieldispersion (Zweistufig), erfindungsgemäß mit Monomeren I, mit Regler und Vernetzer:

In einem mit Dosiereinrichtung und Temperaturregelung ausgerüsteten Polymerisationsgefäß wurden vorgelegt:

Vorlage:

| | |
|---|---|
| 389,7 g | Wasser |
| 51,07 g | Polystyrolsaatlatex (33% in Wasser) |

In einem ersten Zulaufgefäß wurde eine Emulsion aus folgenden Komponenten hergestellt:

| Zulauf 1 | |
|---|---|
| 327,2 g | Wasser |
| 9,7 g | 20% wßr. Lsg. von C16-18-Fettalkoholpolyethoxylat |
| 23,15 g | 28% wßr. Lsg. von Natriumlauryl-polyethoxysulfat |
| 5,19 g | 50% wßr. Lsg. von Acrylamid |
| 9,07 g | 50% wßr. Lsg. von 2-Acrylamido-2-methlypropansulfonsäure |
| 3,24 g | 3-Methacryloxypropyl-trimethoxysilan |
| 465,4 g | n-Butylacrylat |
| 175,7 g | Methylmethacrylat |

In einem zweiten Zulaufgefäß wurde eine Emulsion aus folgenden Komponenten hergestellt:

| Zulauf 2 | |
|---|---|
| 331,7 g | Wasser |
| 9.7 g | 20% wßr. Lsg. von C16-18-Fettalkoholpolyethoxylat |
| 23.15 g | 28% wßr. Lsg. von Natriumlauryl-polyethoxysulfat |
| 5,19 g | 50% wßr. Lsg. von Acrylamid |
| 9,07 g | 50% wßr. Lsg. von 2-Acrylamido-2-methlypropansulfonsäure |
| 7,78 g | tert-Dodexylmercaptan |
| 1,30 g | Allylmethacrylat |
| 3,24 g | 3-Methacryloxypropyl-trimethoxysilan |
| 207,5 g | n-Butylacrylat |
| 432,2 g | Methylmethacrylat |

In einem dritten Zulaufgefäß wurden bereitgestellt:

| Zulauf 3 | |
|---|---|
| 55.6 g | 7% wßr. Lsg. von Natriumperoxodisulfat |

Die Vorlage wurde auf (Außentemperatur: 90 °C, Polymerisationstemperatur: 83 °C, Rührgeschwindigkeit: 150 Upm) erwärmt. Zulauf 1 und 3 wurde gleichzeitig gestartet. Der Zulauf 1 wurde in 1,5 h und anschließend der Zulauf 2 in 1,5 h zudosiert. Zulauf 3 wurde in 3 h zudosiert. Anschließend wurde 30 min. gerührt und danach innerhalb 1 h 11.7 g einer 10% wßr. Lsg. von tert-Butylhydroperoxid und 9.1 g einer 10% wßr. Lsg. von Hydroxymethansulfinsäure zudosiert. Anschließend wurde mit 55,09 g einer 2% wßr. NaOH neutralisiert, 10 min. gerührt, die Rührgeschwindigkeit auf 100 Upm reduziert und abgekühlt. Danach wurden 2.6 g einer 5% wßr. Wasserstoffperoxidlösung sowie 69,18 g Wasser zugegeben. Es wurden 2703 g einer 49,9%igen Dispersion erhalten.

Anwendungstechnische Prüfung:

Anwendungstechnische Prüfung: Nassbeschichtung
(Abmusterung nach 5 Tagen + 60 °C Wasserdampfbad)

Zur Bestimmung der anwendungstechnischen Eigenschaften der erfindungsgemäßen Dispersionen wurden Farben nach folgendem Rezept hergestellt:

| | |
|---|---|
| 92 g | Wasser |
| 0,5 g | Tylose 30000YP2 (ShinEtsu Tylose GmbH & Co. KG, Wiesbaden) |
| 0,5 g | Ammoniak 25% |
| 15 g | Ultradispers MD20 (Dispergiermittel, BASF SE, Ludwigshafen) |
| 3 g | Byk 024 (Entschäumer, Byk Chemie, Wesel) |
| 30,2 g | Titandioxid (Kronos 2310) (Kronos International Inc., Leverkusen) |
| 173,2 g | schwarzes Eisenoxid |
| 26,5 g | Calciumcarbonat (Omyacarb 850 OG, Omya GmbH, Köln) |
| 595,8 g | Bindemitteldispersion |
| 8,5 g | Wasser |
| 15 g | Dowanol DPnB (Dow Chemical Germany, Schwalbach) |
| 24 g | Wachsdispersion (Michem Lube 368.E, Michelman Inc., Capellen, Luxemburg) |
| 8 g | Acticide MKB3 (Thor GmbH, Speyer) |

Die Farben wurden auf vorgewärmte (80°C), gehärtete Faserzementplatten mit ca. 10g Auftragsgewicht aufgesprüht.

Anschließend wurde die beschichtete Faserzementplatte 30 min. bei 80°C getrocknet. Nach der Trocknung legte man die beschichtete Faserzementplatte 5 Tage mit dem Gesicht auf ein 60°C warmes Wasserbad.

Sofort nach Entnahme der Faserzementplatte vom Wasserbad, wurde in feuchtem Zustand das Weißanlaufverhalten beurteilt.

1 kein Weißanlaufen
2 wenige weißen Punkte
3 wenige weiße Flecken
4 einige größere weiße Flächen
5 weiße Fläche

Nach dem Abtrocknen wurde der Grad der Ausblühungen visuell beurteilt. Hierfür wird folgende Notenskala zugrunde gelegt.

0 = keine Ausblühungen
1 = fast keine Ausblühungen
2 = leichte Ausblühungen
3 = mäßige Ausblühungen
4 = starke Ausblühungen
5 = sehr starke Ausblühungen

Zur Bestimmung der Farbveränderung von beschichteten Faserzementplatten, die einer Bewitterung ausgesetzt sind, beurteilt man den Helligkeitsunterschied zwischen den bewitterten und den nicht bewitterten Stellen visuell. Hierfür legte man eine Skala von 0 bis 2 zugrunde.

0 = kein Unterschied
1 = schwach erkennbarer Unterschied
2 = deutlich erkennbarer Unterschied

Die Prüfung "optischer Eindruck" beschreibt die Qualität der Beschichtung in ihrer Gesamtheit ohne vorherige Belastung: Wichtig ist eine gleichmäßige, leicht glänzende Optik des beschichteten Dachsteins ohne Fehlstellen.

Blocktest

Die Farben wurden auf vorgewärmte (80°C), gehärtete Faserzementplatten mit ca. 10g Auftragsgewicht aufgesprüht. Anschließend wurde die beschichtete Faserzementplatte 30 min. bei 80°C getrocknet. Nach der Trocknung legte man je zwei beschichtete Faserzementplatten Gesicht auf Gesicht und ließ ein Gewicht von 180 Kilogramm auf die Fläche von 10 *10cm bei 50°C für 24 Stunden einwirken. Danach ließ man die Platten auf Raumtemperatur abkühlen und versuchte, die Platten zu trennen.

0 = Die Prüfkörper fallen ohne Kraft auseinander
1 = Die Prüfkörper lassen sich ohne Kraftaufwand trennen
2 = Die Prüfkörper lassen sich mit geringem Kraftaufwand trennen
3 = Die Prüfkörper lassen sich mit größerem Kraftaufwand trennen
4 = Die Prüfkörper lassen sich mit starkem Kraftaufwand trennen
5 = Die Prüfkörper lassen sich nicht mehr trennen

Tabelle 1. Anwendungstechnische Prüfung auf Faserzementplatten

| b beanspruchtu unbeansprucht | | | | | |
|---|---|---|---|---|---|
| Beispiel | Farbunterschied trocken zwischen b und u | Weißanlaufen | Ausblühungen | Optischer Eindruck | Blocktest |
| Vgl. 1 | 2 | 3 | 2 | mäßig, fleckig | 2,5 |
| Vgl. 2 | 1-2 | 2 | 1-2 | gut - mäßig | 2 |
| 3 | 0 | 0 -1 | 0 | gut | 1,5 |
| 4 | 0 | 0 | 0 | gut | 1 |
| 5 | 0 | 0 | 0 | gut | 1 |

Bewitterungsprüfung

Zur Prüfung der Bewitterungsstabilität der Farben auf Faserzementplatten wird ein Xenontest nach DIN EN ISO 11341 (Cycle A) für Anstrichmittel durchgeführt und nach jeweils 500h abgemustert. In diesem Xenontest werden beschichtete Faserzementplatten von 5 *13cm Größe jeweils im Wechsel 102 Minuten trocken beleuchtet und 18 Minuten beleuchtet, während die Plättchen mit einem feinen Wassernebel befeuchtet werden. Die relative Luftfeuchtigkeit ist auf 50% eingestellt und die Schwarzstandardtemperatur liegt bei 65°C. Die Bestrahlungsstärke entspricht 60 W UV-Licht bei 300 - 400nm oder 0,51 W/($m^2$·nm) bei 340nm Lichtwellenlänge.

Als Schadenskriterium werden sichtbare Farbschäden, wie Risse oder Ablösungen, Farbveränderungen und der Glanzverlust beurteilt. Der Farbglanz wird mit einem Glossmeter bei 60° Glanzwinkel vor und nach der Bewitterungsprüfung gemessen.

Ergebnisse Xenontest nach jeweils 1500h Prüfdauer:

Bsp. Vgl.1: starker Glanzverlust, erste kleine Risse sichtbar, Glanzverlust 70%

Bsp. Vgl.2: sichtbarer Glanzverlust, Glanzverlust 50%

Bsp. 3: leichter Glanzverlust, Glanzverlust 20%

Bsp. 4: ohne jeden erkennbaren Glanzverlust, Glanzverlust 0%

Bsp. 5: leichter Glanzverlust, Glanzverlust 15%

**Patentansprüche**

**1.** Wässrige mehrstufige Polymerisatdispersionen, erhältlich durch radikalisch initiierte wässrige Emulsionspolymerisation, mit einer Weich- und einer Hartphase und einem Stufenverhältnis von hart zu weich von 25 bis 95 Gew.-% zu 75 bis 5 Gew.-%, wobei die Glasübergangstemperatur (Tg) der Weichphase als erster Stufe -30 bis 0 °C und die der Hartphase als zweiter Stufe 20 bis 60 °C beträgt, enthaltend wenigstens ein Monomeres der allgemeinen Formel I

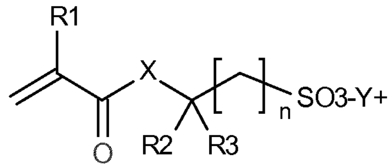

(I)

in der die Variablen folgende Bedeutung haben:

n = 0 bis 2,
R1, R2, R3 = unabhängig voneinander Wasserstoff oder Methylgruppe,
X = O oder NH,
Y = H, Alkalimetall, $NH_4$,
**dadurch gekennzeichnet, dass** es sich bei dem Polymerisat der ersten Stufe um ein Copolymer handelt, welches

(i) in einer Menge von 5 bis 50 Gew.%, bezogen auf 100 Gew.-Teile der insgesamt in der ersten und zweiten Stufe zu polymerisierenden Monomeren, eingesetzt wird, und welches
(ii) zu mindestens 80 Gew.-% und bis zu 99 Gew-% aus Hauptmonomeren aufgebaut ist, welche ausgewählt sind aus der Gruppe bestehend aus C1- bis C10-Alkyl-(meth)acrylaten, Amiden und Hydroxyalkylestern der $\alpha,\beta$-ungesättigten $C_3$-$C_6$-Carbonsäuren, besonders bevorzugt Acrylamid, Methacrylamid, 2-Hydroxyethyl-acrylat, 2-Hydroxyethylmethacrylat, 2-Hydroxypropyl(meth)acrylat oder 1,4-Butan-diolmonoacrylat und Mischungen dieser Monomeren, insbesondere n-Butylacrylat, Methylmethacrylat und Acrylamid, und
(iii) zu mindestens 0,1 Gew.% und bis zu 5 Gew-% Monomere I, welche vorzugsweise ausgewählt sind aus der Gruppe, -2-Acrylamido-2-methyl-propansulfonsäure (AMPS), Methacrylsäure-(3'-sulfopropyl)-ester, Acrylsäure-(3'-sulfopropyl)-ester, Methacrylsäure-(2'-sulfoethyl)-ester, enthält.

2. Wässrige Polymerisatdispersion gemäß Anspruch 1, **dadurch gekennzeichnet**, das deren Weichphase als erster Stufe eine Tg von -20 bis 0°C und deren Hartphase als zweiter Stufe eine Tg von 30 bis 50°C aufweist.

3. Wässrige Polymerisatdispersion gemäß einem der Ansprüche 1 oder 2, **dadurch gekennzeichnet, dass** in beiden Stufen ein Silanmonomer eingesetzt wird.

4. Wässrige Polymerisatdispersion, gemäß einem der Ansprüche 1 bis 3, **dadurch gekennzeichnet**, das als Silanmonomer ein Vinyltrialkoxisilan, wie Vinyltrimethoxisilan, Alkylvinyldialkoxisilane, Methylvinyldialkoxisilan, oder ein (Meth)acryloxyalkyltrial-koxisilane, wie (Meth)acryloxypropyl- trimethoxysilan und (Meth)acryloxypropyltriethoxysilan eingesetzt wird.

5. Wässrige Polymerisatdispersion , gemäß Anspruch 3 oder 4, **dadurch gekennzeichnet, dass** das Silanmonomer in Mengen von bis zu 2 Gew.-%, bezogen auf das Gesamtgewicht der Monomere, eingesetzt wird.

6. Verfahren zur Herstellung einer wässrigen mehrstufige Polymerisatdispersionen, durch radikalisch initiierte wässrige Emulsionspolymerisation, mit einer Weich- und einer Hartphase und einem Stufenverhältnis von hart zu weich von 25 bis 95 Gew.-% zu 75 bis 5 Gew.-%, wobei die Glasübergangstemperatur (Tg) der Weichphase als erster Stufe -30 bis 0 °C und die der Hartphase als zweiter Stufe 20 bis 60 °C beträgt, enthaltend wenigstens ein Monomeres der allgemeinen Formel I

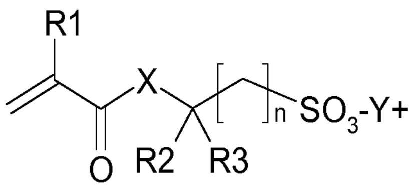

(I)

in der die Variablen folgende Bedeutung haben:

n = 0 bis 2,
R1, R2, R3 = unabhängig voneinander Wasserstoff oder Methylgruppe,
X = O oder NH,
Y = H, Alkalimetall, $NH_4$,
**dadurch gekennzeichnet, dass** es sich bei dem Polymerisat der ersten Stufe um ein Copolymer handelt, welches

(i) in einer Menge von 5 bis 50 Gew.%, bezogen auf 100 Gew.-Teile der insgesamt in der ersten und zweiten Stufe zu polymerisierenden Monomeren, eingesetzt wird, und welches
(ii) zu mindestens 80 Gew.-% und bis zu 99 Gew-% aus Hauptmonomeren aufgebaut ist, welche ausgewählt sind aus der Gruppe bestehend aus C1- bis C10-Alkyl-(meth)acrylaten, Amiden und Hydroxyalkylestern der $\alpha,\beta$-ungesättigten $C_3$-$C_6$-Carbonsäuren, besonders bevorzugt Acrylamid, Methacrylamid, 2-Hydroxyethyl-acrylat, 2-Hydroxyethylmethacrylat, 2-Hydroxypropyl(meth)acrylat oder 1,4-Butan-diolmonoacrylat und Mischungen dieser Monomeren, insbesondere n-Butylacrylat, Methylmethacrylat und Acrylamid, und
(iii) zu mindestens 0,1 Gew.% und bis zu 5 Gew-% Monomere I, welche vorzugsweise ausgewählt sind aus der Gruppe, -2-Acrylamido-2-methyl-propansulfonsäure (AMPS), Methacrylsäure-(3'-sulfopropyl)-ester, Acrylsäure-(3'-sulfopropyl)-ester, Methacrylsäure-(2'-sulfoethyl)-ester, enthält.

**7.** Verwendung wässriger Polymerisatdispersionen gemäß einem der Ansprüche 1 bis 5 als Beschichtungsmittel.

**8.** Verwendung wässriger Polymerisatdispersionen gemäß einem der Ansprüche 1 bis 5 als Bindemittel.

**9.** Verwendung wässriger Polymerisatdispersionen gemäß einem der Ansprüche 1 bis 5 als Zusatz für mineralische oder nichtmineralische Stoffe .

**10.** Mineralische Formkörper deren Beschichtung eine wässrige Polymerisatdispersiongemäß einem der Ansprüche 1 bis 5 enthält.

**11.** Faserzementplatten deren Beschichtung wässrige Polymerisatdispersionen gemäß einem der Ansprüche 1 bis 5 enthält.

## Claims

**1.** An aqueous multistage polymer dispersion obtainable by free-radically initiated aqueous emulsion polymerization, having a soft phase and a hard phase, and a hard-to-soft stage ratio of 25% to 95% by weight to 75% to 5% by weight, the glass transition temperature (Tg) of the soft phase, as first stage, being -30 to 0°C and that of the hard phase, as second stage, being 20 to 60°C, comprising at least one monomer of the general formula I

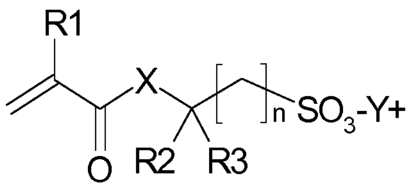

(I)

in which the variables have the following definitions:

n = 0 to 2,
R1, R2, R3 = independently of one another hydrogen or methyl group,
X = 0 or NH,
Y = H, alkali metal, $NH_4$,
wherein the polymer of the first stage is a copolymer which

(i) is used in an amount of 5% to 50% by weight, based on 100 parts by weight of the total monomers to be polymerized in the first and second stages, and which

(ii) is composed to an extent of at least 80% and up to 99% by weight of principal monomers selected from the group consisting of C1 to C10 alkyl (meth)acrylates, amides and hydroxyalkyl esters of $\alpha,\beta$-unsaturated $C_3$-$C_6$ carboxylic acids, more preferably acrylamide, methacrylamide, 2-hydroxyethyl acrylate, 2-hydroxyethyl methacrylate, 2-hydroxypropyl (meth)acrylate or 1,4-butanediol monoacrylate, and mixtures of these monomers, more preferably n-butyl acrylate, methyl methacrylate, and acrylamide, and
(iii) comprises to an extent of at least 0.1% and up to 5% by weight, monomers I, which are preferably selected from the group of 2-acrylamido-2-methylpropanesulfonic acid (AMPS), methacrylic acid 3'-sulfopropyl ester, acrylic acid 3'-sulfopropyl ester, methacrylic acid 2'-sulfoethyl ester.

2. The aqueous polymerization dispersion according to claim 1, wherein the soft phase thereof, as first stage, has a Tg of -20 to 0°C and the hard phase thereof, as second stage, has a Tg of 30 to 50°C.

3. The aqueous polymer dispersion according to either of claims 1 and 2, wherein a silane monomer is used in both stages.

4. The aqueous polymer dispersion according to any of claims 1 to 3, wherein use is made as silane monomer of a vinyltrialkoxysilane, such as vinyltrimethoxysilane, alkylvinyldialkoxysilanes, methylvinyldialkoxysilane, or a (meth)acryloyloxyalkyltrialkoxysilane, such as (meth)acryloyloxypropyltrimethoxysilane and (meth)acryloyloxypropyltriethoxysilane.

5. The aqueous polymer dispersion according to claim 3 or 4, wherein the silane monomer is used in amounts of up to 2% by weight, based on the total weight of the monomers.

6. A process for preparing an aqueous multistage polymer dispersion by free-radically initiated aqueous emulsion polymerization, having a soft phase and a hard phase, and a hard-to-soft stage ratio of 25% to 95% by weight to 75% to 5% by weight, the glass transition temperature (Tg) of the soft phase, as first stage, being -30 to 0°C and that of the hard phase, as second stage, being 20 to 60°C, comprising at least one monomer of the general formula I

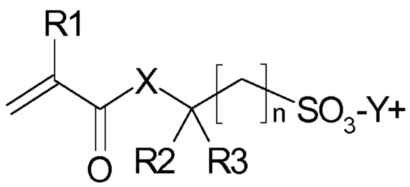
(I)

in which the variables have the following definitions:

n = 0 to 2,
R1, R2, R3 = independently of one another hydrogen or methyl group,
X = O or NH,
Y = H, alkali metal or $NH_4$,
wherein the polymer of the first stage is a copolymer which

(i) is used in an amount of 5% to 50% by weight, based on 100 parts by weight of the total monomers to be polymerized in the first and second stages, and which
(ii) is composed to an extent of at least 80% and up to 99% by weight of principal monomers selected from the group consisting of C1 to C10 alkyl (meth)acrylates, amides and hydroxyalkyl esters of $\alpha$, $\beta$-unsaturated $C_3$-$C_6$ carboxylic acids, more preferably acrylamide, methacrylamide, 2-hydroxyethyl acrylate, 2-hydroxyethyl methacrylate, 2-hydroxypropyl (meth)acrylate or 1,4-butanediol monoacrylate, and mixtures of these monomers, more preferably n-butyl acrylate, methyl methacrylate, and acrylamide, and
(iii) comprises to an extent of at least 0.1% and up to 5% by weight, monomers I, which are preferably selected from the group of 2-acrylamido-2-methylpropanesulfonic acid (AMPS), methacrylic acid 3'-sulfopropyl ester, acrylic acid 3'-sulfopropyl ester, methacrylic acid 2'-sulfoethyl ester.

7. The use of an aqueous polymer dispersion according to any of claims 1 to 5 as a coating composition.

8. The use of an aqueous polymer dispersion according to any of claims 1 to 5 as a binder.

**9.** The use of an aqueous polymer dispersion according to any of claims 1 to 5 as an additive to mineral or nonmineral substances.

**10.** A mineral molding whose coating comprises an aqueous polymer dispersion according to any of claims 1 to 5.

**11.** A fiber cement sheet whose coating comprises an aqueous polymer dispersion according to any of claims 1 to 5.

**Revendications**

**1.** Dispersions polymères aqueuses multiétapes, pouvant être obtenues par polymérisation en émulsion aqueuse initiée radicalairement, comprenant une phase souple et une phase dure et un rapport d'étapes entre la phase dure et la phase souple de 25 à 95 % en poids sur 75 à 5 % en poids, la température de transition vitreuse (Tg) de la phase souple en tant que première étape étant de -30 à 0 °C et celle de la phase dure en tant que deuxième étape étant de 20 à 60 °C, contenant au moins un monomère de formule générale I

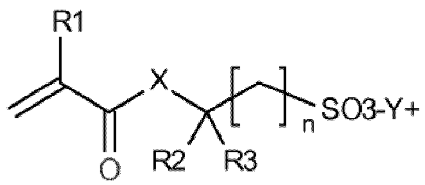

(I)

dans laquelle les variables ont la signification suivante :

n = 0 à 2,
R1, R2, R3 = indépendamment les uns des autres l'hydrogène ou un groupe méthyle,
X = O ou NH,
Y = H, métal alcalin, $NH_4$,
**caractérisées en ce que** le polymère de la première étape est un copolymère qui

(i) est utilisé en une quantité de 5 à 50 % en poids, par rapport à 100 parties en poids des monomères à polymériser au total dans la première et la deuxième étape, et qui
(ii) est formé par au moins 80 % en poids et jusqu'à 99 % en poids de monomères principaux, qui sont choisis dans le groupe constitué par les (méth)acrylates d'alkyle en C1 à C10, les amides et les esters hydroxyalkyliques d'acides carboxyliques en $C_3$-$C_6$ $\alpha,\beta$-insaturés, de manière particulièrement préférée l'acrylamide, le méthacrylamide, l'acrylate de 2-hydroxyéthyle, le méthacrylate de 2-hydroxyéthyle, le (méth)acrylate de 2-hydroxypropyle ou le monoacrylate de 1,4-butanediol et les mélanges de ces monomères, notamment l'acrylate de n-butyle, le méthacrylate de méthyle et l'acrylamide, et
(iii) contient au moins 0,1 % en poids et jusqu'à 5 % en poids de monomères I, qui sont de préférence choisis dans le groupe constitué par l'acide 2-acrylamido-2-méthyl-propanesulfonique (AMPS), l'ester 3'-sulfopropylique de l'acide méthacrylique, l'ester 3'-sulfopropylique de l'acide acrylique, l'ester 2'-sulfoéthylique de l'acide méthacrylique.

**2.** Dispersion polymère aqueuse selon la revendication 1, **caractérisée en ce que** sa phase souple en tant que première étape présente une Tg de -20 à 0 °C et sa phase dure en tant que deuxième étape présente une Tg de 30 à 50 °C.

**3.** Dispersion polymère aqueuse selon l'une quelconque des revendications 1 ou 2, **caractérisée en ce qu'**un monomère silane est utilisé dans les deux étapes.

**4.** Dispersion polymère aqueuse selon l'une quelconque des revendications 1 à 3, **caractérisée en ce qu'**un vinyltrialcoxysilane, tel que le vinyltriméthoxysilane, les alkylvinyldialcoxysilanes, le méthylvinyldialcoxysilane, ou un (méth)acryloxyalkyltrialcoxysilane, tel que le (méth)acryloxypropyltriméthoxysilane et le (méth)acryloxypropyltriéthoxysilane, est utilisé en tant que monomère silane.

**5.** Dispersion polymère aqueuse selon la revendication 3 ou 4, **caractérisée en ce que** le monomère silane est utilisé

en quantités de jusqu'à 2 % en poids, par rapport au poids total des monomères.

6. Procédé de fabrication d'une dispersion polymère aqueuse multiétapes, par polymérisation en émulsion aqueuse initiée radicalairement, comprenant une phase souple et une phase dure et ayant un rapport d'étapes entre la phase dure et la phase souple de 25 à 95 % en poids sur 75 à 5 % en poids, la température de transition vitreuse (Tg) de la phase souple en tant que première étape étant de -30 à 0 °C et celle de la phase dure en tant que deuxième étape étant de 20 à 60 °C, contenant au moins un monomère de formule générale I

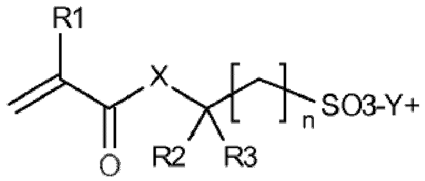

(I)

dans laquelle les variables ont la signification suivante :

n = 0 à 2,
R1, R2, R3 = indépendamment les uns des autres l'hydrogène ou un groupe méthyle,
X = O ou NH,
Y = H, métal alcalin, $NH_4$,
**caractérisé en ce que** le polymère de la première étape est un copolymère qui

(i) est utilisé en une quantité de 5 à 50 % en poids, par rapport à 100 parties en poids des monomères à polymériser au total dans la première et la deuxième étape, et qui
(ii) est formé par au moins 80 % en poids et jusqu'à 99 % en poids de monomères principaux, qui sont choisis dans le groupe constitué par les (méth)acrylates d'alkyle en C1 à C10, les amides et les esters hydroxyalkyliques d'acides carboxyliques en $C_3$-$C_6$ $\alpha,\beta$-insaturés, de manière particulièrement préférée l'acrylamide, le méthacrylamide, l'acrylate de 2-hydroxyéthyle, le méthacrylate de 2-hydroxyéthyle, le (méth)acrylate de 2-hydroxypropyle ou le monoacrylate de 1,4-butanediol et les mélanges de ces monomères, notamment l'acrylate de n-butyle, le méthacrylate de méthyle et l'acrylamide, et
(iii) contient au moins 0,1 % en poids et jusqu'à 5 % en poids de monomères I, qui sont choisis dans le groupe constitué par l'acide 2-acrylamido-2-méthyl-propanesulfonique (AMPS), l'ester 3'-sulfopropylique de l'acide méthacrylique, l'ester 3'-sulfopropylique de l'acide acrylique, l'ester 2'-sulfoéthylique de l'acide méthacrylique.

7. Utilisation de dispersions polymères aqueuses selon l'une quelconque des revendications 1 à 5 en tant qu'agent de revêtement.

8. Utilisation de dispersions polymères aqueuses selon l'une quelconque des revendications 1 à 5 en tant que liant.

9. Utilisation de dispersions polymères aqueuses selon l'une quelconque des revendications 1 à 5 en tant qu'additif pour matières minérales ou non minérales.

10. Corps moulés minéraux dont le revêtement contient une dispersion polymère aqueuse selon l'une quelconque des revendications 1 à5.

11. Panneaux en fibrociment dont le revêtement contient des dispersions polymères aqueuses selon l'une quelconque des revendications 1 à 5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2164256
- EP 469295 A
- DE 19514266 A
- DE 10343726
- EP 915071 A
- EP 821660 A
- EP 623659 A
- EP 1466929 A
- WO 03031526 A
- EP 894780 A
- EP 1948574 A
- EP 1518846 A
- DE 102005032195
- EP 2017313 A
- WO 2009080614 A
- DE 2722097 A
- US 4226007 A
- DE 2061213 A
- DE 2207209 A
- WO 9325588 A
- US 4269749 A
- EP 81083 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- DE 3827975 A
- DE 3901073 A
- EP 417568 A


### In der Beschreibung aufgeführte Nicht-Patentliteratur


- **T.G. FOX.** *Bull. Am. Phys. Soc.,* 1956, 123
- Ullmann's Encyclopädie der technischen Chemie. Verlag Chemie, 1980, vol. 19, 18
- Ullmann's Ecyclopedia of Industrial Chemistry. VCH Weinheim, 1992, 169
- **J. BRANDRUP ; E.H. IMMERGUT.** Polymer Handbook. J. Wiley, 1966
- **K. C. BERGER ; G. BRANDRUP ; J. BRANDRUP ; E. H. IMMERGUT.** Polymer Handbook. John Wiley & Sons, 1989, II/81-II/141
- Methoden der organischen Chemie. **HOUBEN-WEYL.** Makromolekulare Stoffe. Georg Thieme Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- Methoden der organischen Chemie. **HOUBEN-WEYL.** Makromolekulare Stoffe. Georg-Thieme-Verlag, 1961, vol. XIV/1, 192-208
- **S.E. HARDING et al.** Analytical Ultracentrifugation in Biochemistry and Polymer Science. Royal Society of Chemistry, 1992
- **W. MÄCHTLE.** Analysis of Polymer Dispersions with an Eight-Cell-AUC-Multiplexer. *High Resolution Particle Size Distribution and Density Gradient Techniques,* 147-175